# EUROPEAN PATENT SPECIFICATION

(11) **EP 1 944 844 B1**
(45) Date of publication and mention of the grant of the patent: **21.04.2010**
(21) Application number: 07022297.1
(22) Date of filing: 16.11.2007
(51) Int. Cl.: H02G 3/06

(54) **Safety cable clamp for electric appliances**
Sicherheitskabelklemme für Elektrogeräte
Serre-câble de sécurité pour appareils électriques

(30) Priority: 11.01.2007 IT MI20070033
(43) Date of publication of application: 16.07.2008
(73) Proprietor: TECHNO S.r.l., 22070 Guanzate (CO) (IT)
(72) Inventor: Galli, Sandro, 22070 Guanzate (COMO) (IT)
(74) Representative: Cicogna, Franco

(56) References cited:
- DE-U1- 29 706 023
- DE-U1- 29 908 267
- US-A- 4 358 079

## Description

### BACKGROUND OF THE INVENTION

The present invention relates to a safety cable clamp, to be coupled to electric appliances or apparatus in general, and including safety elements.

As is known, are already commercially available cable clamps which generally comprise a body to be coupled to an electric appliance or apparatus and defining an inner throughgoing channel for the electric cable, which is so clamped as to prevent the electric cable from axially slide, even if said electric cable is subjected to a pulling force.

Prior cable clamps conventionally comprise a clamping ring-nut which is screwed on the cable clamp body and defines a frustum of cone surface which, by operating on a resiliently deformable body, causes the latter to be radially shrunk, thereby providing the desired clamping force.

The above mentioned cable clamp comprises a very high number of component elements and, accordingly, it has a comparatively high cost, mainly deriving from the requirement of making a lot of individual elements and then properly assembling the latter.

Another problem affecting prior cable clamps is that the component elements thereof are frequently not properly assembled by the user, thereby providing unstable and potentially dangerous electric connections.

The documents US-A-4 358 079 and DE 297 06 023 disclose in combination the features of preamble of claim 1.

### SUMMARY OF THE INVENTION

Accordingly, the aim of the present invention is to overcome the above mentioned drawbacks, by providing a cable clamp to be coupled to electric appliances or apparatus in general, including safety elements, which can be made with a very reduced number of component elements, thereby overcoming all the problems related to the making and assembling steps.

Within the scope of the above mentioned aim, a main object of the invention is to provide such a cable clamp, allowing the electric cable to be precisely clamped, without damaging said electric cable.

Yet another object of the present invention is to provide such a cable clamp which, owing to its specifically designed structural characteristics, is very reliable and safe in operation.

According to one aspect of the present invention, the above mentioned aim and objects, as well as yet other objects, which will become more apparent hereinafter, are achieved by a cable clamp to be coupled to an electric appliances according to claim 1.

### BRIEF DESCRIPTION OF THE DRAWINGS

Further characteristics and advantages of the present invention will become more apparent hereinafter from the following detailed disclosure of a preferred, though not exclusive, embodiment thereof, which is illustrated, by way of an indicative, but not limitative, example in the accompanying drawings, where:

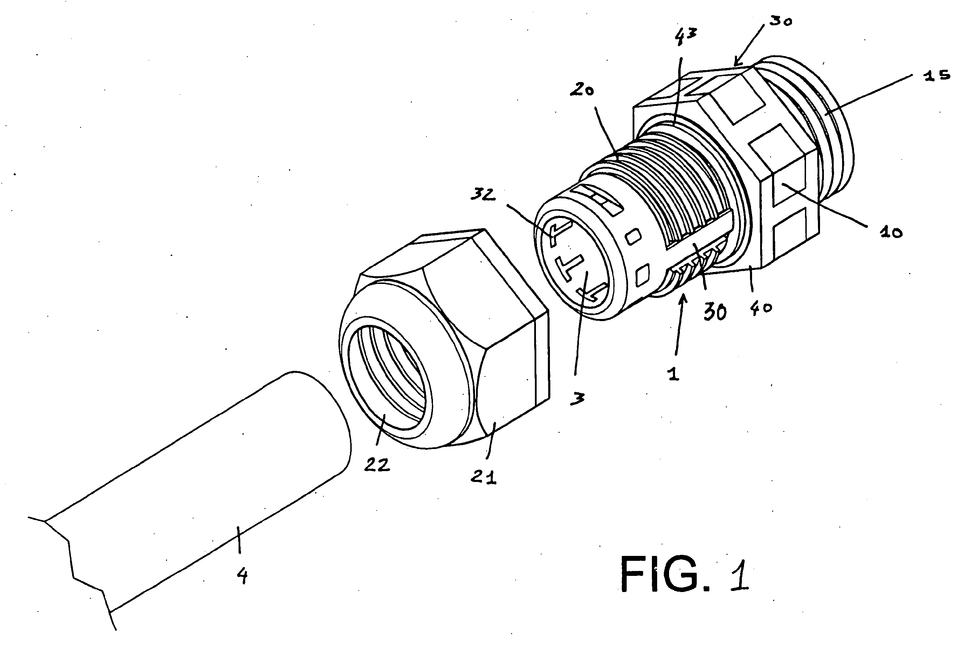

Figure 1 is a schematic perspective view, in an exploded form, illustrating the cable clamp according to the present invention;

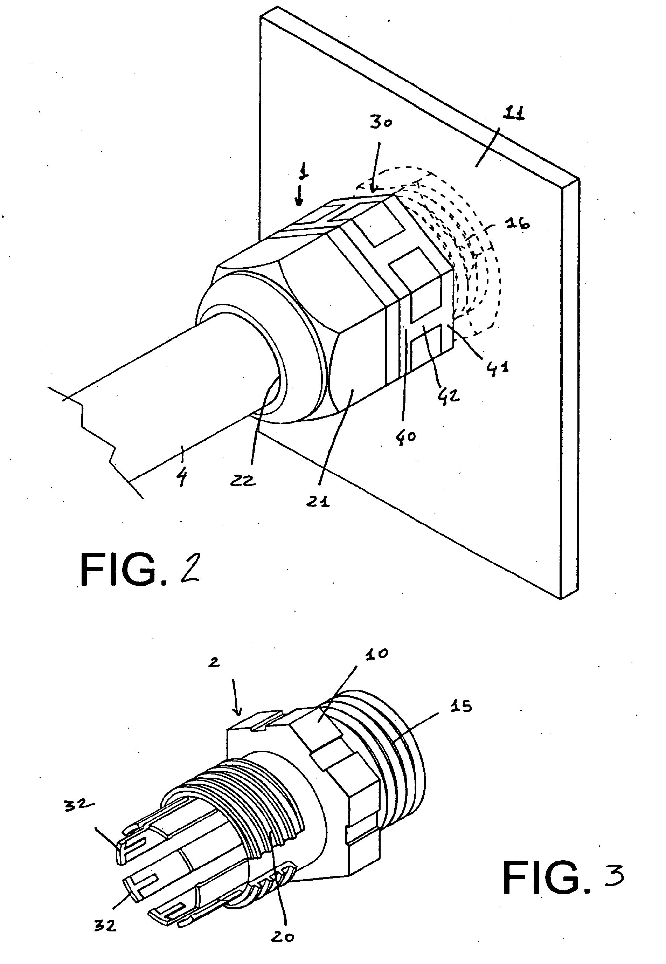

Figure 2 is a further perspective view showing the same cable clamp, applied to an electric appliance or apparatus;
Figure 3 shows the body of the cable clamp, with the resilient coating being removed therefrom;

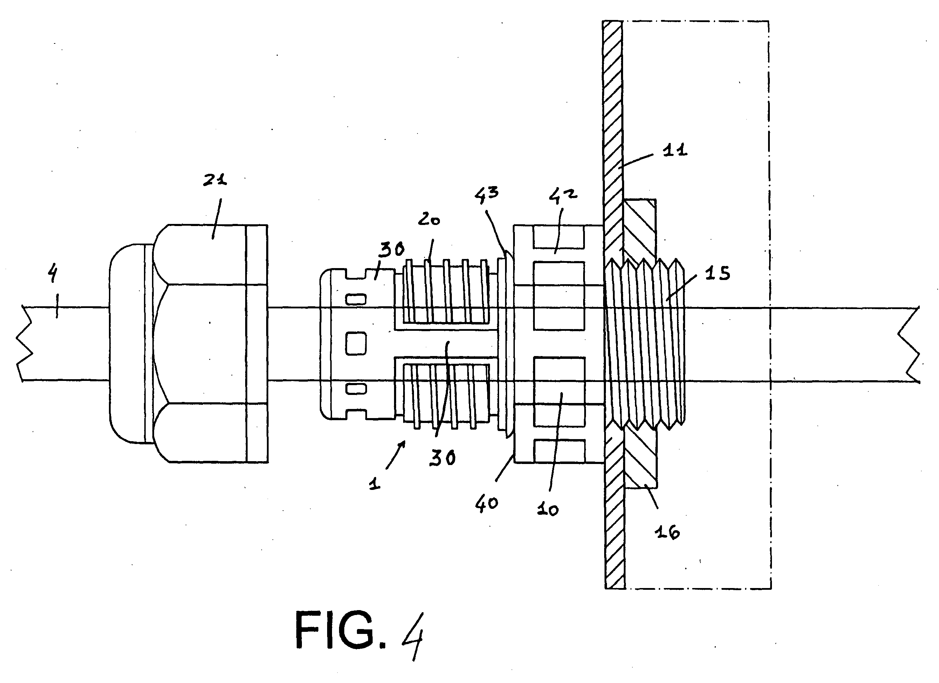

Figure 4 is a side exploded view showing the cable clamp, applied to an electric appliance or apparatus;

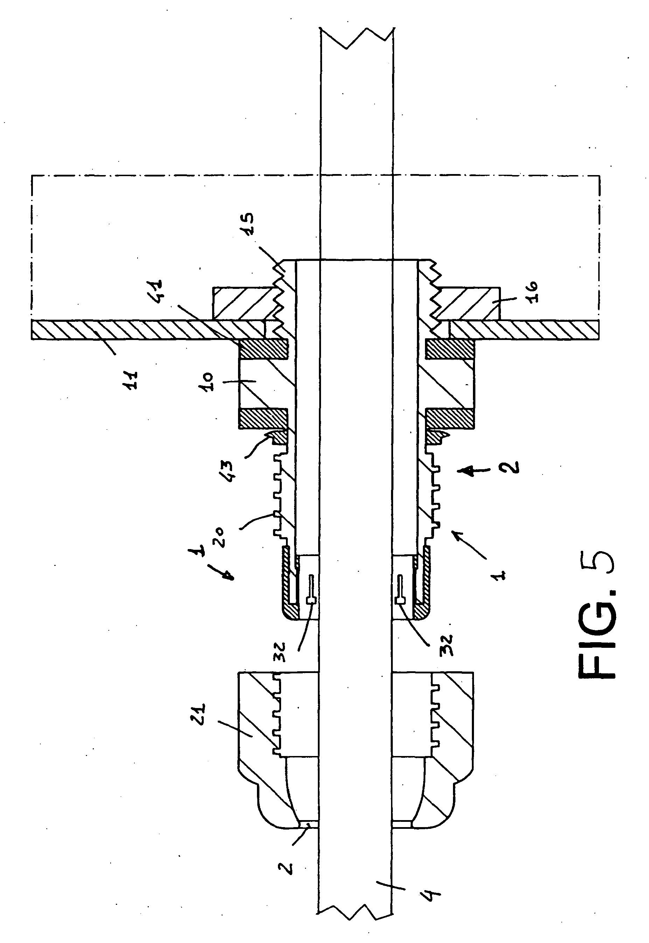

Figure 5 is a cross-sectional view showing the cable clamp according to the present invention;
   and

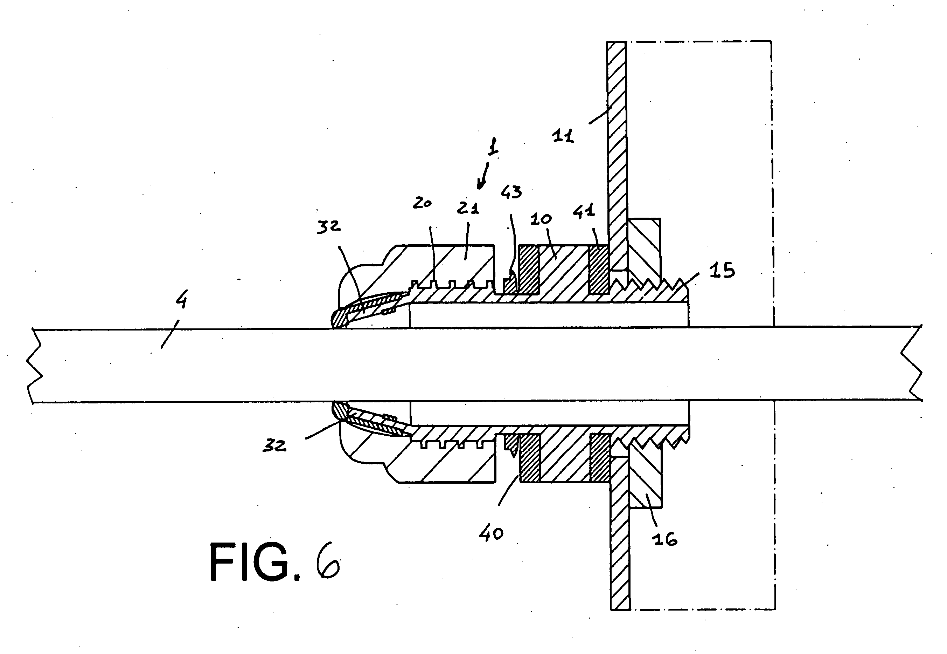

Figure 6 is a further cross-sectional view showing the inventive cable clamp, in a performed clamping condition.

### DESCRIPTION OF THE PREFERRED EMBODIMENTS

With reference to the number references of the above mentioned figures, the cable clamp, to be coupled to electric appliances or apparatus in general, including safety elements, according to the present invention, which has been generally indicated by the reference number 1, comprises a cap element 21, defining a throughgoing channel 3 for allowing an electric cable, generally indicated by the reference number 4, to pass therethrough.

Said body 2 defines on a middle portion thereof a flange 10, having preferably a polygonal configuration, to be coupled to a clamping tool for clamping to an electric appliance or apparatus, generally indicated by the reference number 11.

Said body 2 comprises an end portion defining an inner threaded part 15, which can be clamped to the appliance 11 through a conventional clamping nut 16.

At the other end portion of said body 2 is provided a further outer threaded part 20, for engagement with a clamping cap 21, which provides, as it will become more apparent hereinafter, the clamping means.

The main feature of the invention is that, at least at the end portion engaging with the cap 21, a resiliently yieldable coating generally indicated by the reference number 30, made of a thermoplastic rubber material, such as of a SEBS-TPEV type, is provided.

The thermoplastic rubber layer, in particular, is made as a single piece with said body 2, since it is overmolded at least at the end portion engaging the cap, where it practically embeds therein a plurality of resiliently yieldable tongues 32 which, by engaging with the conic part 22 of the cap 21, are radially clamped by screwing the cap on the outer thread 20.

Advantageously, the thermoplastic rubber molding also affects the flange surfaces, thereby providing an outer layer 40 and an inner layer 41, coupled to one another by axial portions 42, passing through the middle of the polygonal flange sides.

Advantageously, said outer layer 40 comprises an edge 43, operating as a sealing gasket element for the cap 21 clamped on the thread 20, whereas said layer 41 operates as a sealing or tight element, for the electric appliance.

From the above disclosure it should be apparent that the invention fully achieves the intended aim and objects.

In particular, the fact is to be pointed out that the invention provides a cable clamp in which the cable clamp body, which is advantageously made of a comparatively rigid plastic material, such as polyamide 66, comprises co-molded portions which, being made of a resiliently yieldable material, practically provide a clamping and sealing or gasket element, which is directly made in a single piece.

The invention, as disclosed, is susceptible to several modifications and variations, all of which will come within the scope of the invention.

Moreover, all the constructional details can be replaced by other technically equivalent elements.

In practicing the invention, the used materials, as well as the contingent size and shapes, can be any, depending on requirements.

## Claims

1. A cable clamp (1) to be coupled to an electric appliance (11), said cable clamp including safety elements, comprising a cable clamp body (2) defining a throughgoing channel (3) for allowing an electric cable (4) to pass therethrough and which, at one end thereof, can be clamped to said electric appliance (11) and, at the other end thereof, defines clamping means (21) for clamping on said electric cable, said cable clamp further comprising a resiliently yieldable member (30), arranged at least at a said clamping means, said resiliently yieldable member (30) being made in a single piece with said body (2), said body (2) defining a middle flange (10) engageable by a clamping tool, said flange (10) being arranged between an inner threaded part (15) to be clamped to said electric appliance (11) by a clamping nut (16) and an outer threaded part (20) for engaging with a clamping cap (21) providing said clamping means, said clamping cap (21) having a clamping cap conic part (22), said resiliently yieldable member being a resiliently yieldable coating, **characterized in that** said resiliently yieldable coating (30) comprises a plurality of embedded resiliently yieldable axially extending tongues (32) which, by engaging with said conic part (22) of said clamping cap (21), are radially clamped as said clamping cap (21) is screwed on said outer threaded part (20).

2. A cable clamp, according to claim 1, **characterized in that** said resiliently yieldable coating (30) comprises a thermoplastic rubber material overmolded at least at an end portion engaging with said clamping cap (21).

3. A cable clamp, according to claims 1 and 2, **characterized in that** said middle flange (10) has a polygonal configuration.

4. A cable clamp, according to claims 1 to 3, **characterized in that** said resiliently yieldable coating (30) also covers surfaces of said middle flange (10) thereby providing an outer layer (40) and an inner layer (41), said outer (40) and inner (41) layers being coupled by axial portions (42) passing through a middle of the polygonal flange (10) sides.

5. A cable clamp, according to claim 4, **characterized in that** said outer layer (40) comprises an edge (43) operating as a sealing gasket element for said clamping cap (21) threaded on said outer threaded part (20).

## Patentansprüche

1. Kabelklemme (1), die an ein Elektrogerät (11) anzuschließen ist, wobei die Kabelklemme Sicherheitselemente enthält, die einen Kabelklemmenkörper (2) umfassen, der einen durchgehenden Kanal (3) festlegt, um das Durchführen eines Elektrokabels (4) zu ermöglichen, und die an ihrem einen Ende an das Elektrogerät (11) angeklemmt werden kann und die an ihrem anderen Ende Klemmmittel (21) zum Anklemmen an das Elektrokabel festlegt, wobei die Kabelklemme ein elastisch nachgebendes Bauteil (30) umfasst, das zumindest an dem Klemmmittel angebracht ist, wobei das elastisch nachgebende Bauteil (30) in einem Stück mit dem Körper (2) angefertigt ist, wobei der Körper (2) einen Mittelflansch (10) festlegt, an dem ein Klemmwerkzeug angreifen kann, wobei der Flansch (10) angeordnet ist zwischen einem Innengewindeteil (15), das durch eine Klemmmutter (16) an das Elektrogerät (11) anzuklemmen ist, und einem Außengewindeteil (20) für das Ineinandergreifen mit einer Klemmhaube (21), was die Klemmmittel bereitstellt, wobei die Klemmhaube (21) einen konischen Klemmhaubenanteil (22) aufweist, wobei das elastisch nachgebende Bauteil ein elastisch nachgebender Belag ist, **dadurch gekennzeichnet, dass** der elastisch nachgebende Belag (30) mehrere eingebettete elastisch nachgebende, sich axial erstreckende Zungen (32) aufweist, die durch den Eingriff mit dem konischen Teil (22) der Klemmhaube (21) radial eingeklemmt werden, wenn die Klemmhaube (21) auf das Außengewindeteil (20) geschraubt wird.

2. Kabelklemme nach Anspruch 1, **dadurch gekennzeichnet, dass** der elastisch nachgebende Belag (30) ein thermoplastisches Gummimaterial umfasst, das auf mindestens einen Endabschnitt aufgepresst ist, der im Eingriff mit der Klemmhaube (21) ist.

3. Kabelklemme nach Anspruch 1 und 2, **dadurch gekennzeichnet, dass** der Mittelflansch (10) eine Vieleckgestalt aufweist.

4. Kabelklemme nach Anspruch 1 bis 3, **dadurch gekennzeichnet, dass** der elastisch nachgebende Belag (30) auch Oberflächen des Mittelflansches (10) abdeckt, wodurch eine äußere Schicht (40) und eine innere Schicht (41) geschaffen werden, wobei die äußere (40) und die innere Schicht (41) durch axiale Abschnitte (42) verbunden sind, die durch eine Mitte der Vieleckflanschseiten (10) hindurchführen.

5. Kabelklemme nach Anspruch 4, **dadurch gekennzeichnet, dass** die äußere Schicht (40) eine Kante (43) aufweist, die als ein Dichtungsmanschettenelement für die Klemmhaube (21) wirkt, die auf das Außengewindeteil (20) aufgezogen ist.

## Revendications

1. Serre-câble (1) destiné à être couplé à un appareil électrique (11) ledit serre-câble incluant des éléments de sécurité, comprenant un corps de serre-câble (2) définissant un canal traversant (3) permettant à un câble électrique (4) de passer à travers celui-ci et qui, à l'une de ses extrémités, peut être fixé par serrage sur ledit appareil électrique (11), et à son autre extrémité, définit un moyen de serrage (21) permettant la fixation par serrage sur ledit câble électrique, ledit serre-câble comprenant en outre un organe élastiquement déformable (30), agencé au moins au niveau d'un dit moyen de serrage, ledit organe élastiquement déformable (30) étant constitué en une seule pièce avec ledit corps (2), ledit corps (2) définissant une bride médiane (10) sur laquelle peut s'engager un outil de serrage, ladite bride (10) étant agencée entre une partie filetée intérieure (15) destinée à être fixée par serrage sur ledit appareil électrique (11) grâce à un écrou de serrage (16), et une partie filetée extérieure (20) destinée à un engagement avec un capuchon de serrage (21) fournissant ledit moyen de serrage, ledit capuchon de serrage (21) présentant une partie conique de capuchon de serrage (22), ledit organe élastiquement déformable étant une protection élastiquement déformable, **caractérisé en ce que** ladite protection élastiquement déformable (30) comprend une pluralité de languettes intégrées (32) élastiquement déformables et s'étendant axialement qui, par engagement avec ladite partie conique (22) dudit capuchon de serrage (21), sont radialement serrées au fur et à mesure que ledit capuchon de serrage (21) est vissé sur ladite partie filetée extérieure (20).

2. Serre-câble selon la revendication 1, **caractérisé en ce que** ladite protection élastiquement déformable (30) comprend un caoutchouc thermoplastique surmoulé au moins au niveau d'une partie d'extrémité en engagement avec ledit capuchon de serrage (21).

3. Serre-câble selon les revendications 1 et 2, **caractérisé en ce que** ladite bride médiane (10) présente une configuration polygonale.

4. Serre-câble selon les revendications 1 à 3, **caractérisé en ce que** ladite protection élastiquement déformable (30) recouvre également les surfaces de ladite bride médiane (10) en fournissant ainsi une couche extérieure (40) et une couche intérieure (41), lesdites couches extérieure (40) et intérieure (41) étant couplées par des parties axiales (42) passant au milieu des côtés de la bride polygonale (10).

5. Serre-câble selon la revendication 4, **caractérisé en ce que** ladite couche extérieure (40) comprend un bord (43) qui sert d'élément de joint d'étanchéité pour ledit capuchon de serrage (21) fileté sur ladite partie filetée extérieure (20).
